Europäisches Patentamt

European Patent Office

Office européen des brevets

(11) Publication number: **0 081 997**
A1

# (12) EUROPEAN PATENT APPLICATION

(21) Application number: 82306611.3

(22) Date of filing: 10.12.82

(51) Int. Cl.³: **G 02 B 15/16**

(30) Priority: 14.12.81 JP 199989/81

(43) Date of publication of application: 22.06.83
Bulletin 83/25

(84) Designated Contracting States: DE FR GB

(71) Applicant: KONISHIROKU PHOTO INDUSTRY CO. LTD.,
No. 26-2, Nishishinjuku 1-chome Shinjuku-ku,
Tokyo 160 (JP)

(72) Inventor: Shimokura, Toshiko, 940-262, Uthugicho,
Hachiohji-shi Tokyo (JP)
Inventor: Ishiyama, Shozo, 15-1, 3-chome Higashitoyoda,
Hino-shi Tokyo (JP)
Inventor: Watanabe, Yoshiko, 19-8, 2-chome
Ohwadacho, Hachioji-shi Toyko (JP)
Inventor: Banno, Makoto, 1895-46, Yamadacho,
Hachiohji-shi Toyko (JP)

(74) Representative: Wood, Anthony Charles et al, c/o
MICHAEL BURNSIDE & PARTNERS 2 Serjeants' Inn
Fleet Street, London EC4Y 1HL (GB)

(54) **Compact zoom lens.**

(57) A zoom lens of the type in which focusing is carried out by a first lens component ($L_1$–$L_3$), zooming is carried out by a second lens component ($L_4$–$L_6$), a change in position of image resulting from zooming is corrected by a third lens component ($L_7$), a fourth lens component ($L_8$–$L_9$) comprises an afocal system, and an image is formed by a fifth lens component ($L_{10}$–$L_{15}$). If in a zoom lens of this kind, the zoom ratio is made great by a large aperture, the lens inevitably has to be of a large size. In the present invention, the refractive power of the negative second lens component is made great, the great zoom ratio is obtained with a small amount of movement, and to avoid an adverse effect, a powerful positive refractive power is provided for the first surface. In addition, the thickness of each lens and air spacing are made as small as possible to obtain a zoom lens which is compact having Fl.2 and zoom ratio 6 and which is well corrected in aberration.

COMPACT ZOOM LENS

BACKGROUND OF THE INVENTION

Field of the Invention

This invention relates to a compact zoom lens which has a large aperture from Fl.4 to 1.2, is small in size while having a great zoom ratio of about 6 and particularly has a small diameter of a front lens.

Description of the Prior Art

A zoom lens system is well known which comprises, orderly from an object side, a first lens component having a focusing function, a second lens component which moves resulting from zooming principally having the action of changing the focal length, a third lens component which moves resulting from zoom-principally having the action for maintaining the focal position constant, a fourth lens component for placing an emanation light flux afocal, said flux being emitted from a zoom system comprising the first, the second and the third lens components, and a fifth lens component by which an image is formed.

In the lens system so designed as described, if the zoom ratio is made great such as 6, the amount of movement of the second lens component increases to increase the overall length of the zoom lens, which provides a bright lens system having Fl.4 to 1.2, and the end of the wide angle includes a sub-side angle up to an angle of view 27°, and a larger diameter of lens must be provided in order not to produce vignetting of the peripheral light flux. In any case, there poses a drawback in that the shape of the zoom lens becomes large.

## SUMMARY OF THE INVENTION

In accordance with the present invention, a zoom system comprising first, second and third lens components comprises positive, negative and negative, the refractive power of the second lens component having the action of changing the focal length is made extremely greater than that of prior arts so that a large zoom ratio is obtained by the small amount of movement, the adverse affect of the surplus negative refractive power resulting therefrom is restrained and a powerful positive refractive power is imparted to the first surface so as to prevent variation of each of aberrations.

In addition to the above, in order to reduce the length of the lens system, the zoom system portion provides an arrangement wherein the thickness of lenses and the air spacing are minimized, and the focusing system portion provides an arrangement wherein the total length of the overall length of lenses and the backfocus fb is reduced.

Further, in the focusing system, a spherical aberration is corrected to have a large aperture thereby providing a small telephoto ratio, and emphasis is laid on correction of distortion aberration and chromatic aberration.

The zoom lens as described comprises, orderly from an object side,

a positive first lens component, a negative second lens component, a negative third lens component, a positive fourth lens component, and a positive fifth lens component with an aperture or a prism and the aperture interposed between lenses,

the first lens component having a function of focusing, the second lens component being moved along with zooming and principally having the action of changing the focal length, the third lens component being moved resulting from zooming to thereby principally have the action for maintaining the focal position constant, the fourth lens component having the action of correcting an emanation light flux afocal, said flux being emitted from a zoom system comprising the first, the second and the third lens components, and the fifth lens component serving as a focusing system,

the first lens component comprising two groups and three lenses, i.e., a positive lens in which a negative meniscus lens $L_1$ and a positive lens $L_2$ are joined and a positive lens $L_3$ with a convex directed towards the object, the second lens component comprising two groups and three lenses, i.e., a negative meniscus lens $L_4$ with a concave directed towards the image and a negative lens in which a dual concave lens $L_5$

and a positive lens $L_6$ are joined, the third lens component comprising a single group and a single lens, i.e., a negative single lens $L_7$ with a concave directed towards the object, the fourth lens component comprising two groups and two lenses, i.e., a positive lens $L_8$ with a convex directed towards the image and a dual convex lens $L_9$, and the fifth lens component .with an aperture or a prism and the aperture interposed between lenses comprising five groups and five lenses, i.e., a positive lens $L_{10}$ with a convex directed towards the object, a meniscus positive lens $L_{11}$ with a convex directed towards the object, a negative lens $L_{12}$ with a concave directed towards the object, a positive lens $L_{14}$ with a convex directed towards the image and a positive lens $L_{15}$ with a convex directed towards the object, or six groups and six lens which comprises a further negative lens $L_{13}$ with a concave directed towards the image between the negative lens $L_{12}$ and positive lens $L_{14}$, said zoom lens being characterized by being satisfied with the conditions below:

$$1.0 \ fw \ < \ |fII| \ < \ 1.6 \ fw \qquad fII < 0 \quad \dots \ (1)$$

$$0.8 \ fI \ < \ Rl \ < \ 3.0 \ fl \qquad \dots \ (2)$$

$$3.0 \ |fII| < \ R6 \ < \ 30 \ |fII| \qquad \dots \ (3)$$

$$1.6 \ < \ n7 \qquad \dots \ (4)$$

$$1.2 \ fV \ < \ f17 \ < \ 4.0 \ fV \qquad \dots \ (5)$$

$$1.7 \ < \ n12 \qquad \dots \ (6)$$

$$n10, \ n11 \ < \ 1.65 \qquad \dots \ (7)$$

$$55 \quad < \nu 10, \nu 11 \qquad \ldots (8)\text{-}(a)$$

$$\nu 14 + \nu 15 < \nu 10 + \nu 11 \qquad \ldots (8)\text{-}(b)$$

where

$f_w$: focal length at the wide angle end of the overall system

$f_I$: focal length of the first lens component

$f_{II}$: focal length of the second lens component

$f_V$: focal length of the fifth lens component

$f17$: focal length of surface nearest to the object of the fifth lens component

$R_i$: radius of curvature of the $i^{th}$ lens surface from the object

$n_i$: refractive index of the $i^{th}$ lens material from the object

$\nu_i$: number of Abbe of the $i^{th}$ lens material from the object.

The condition (1) is the basical condition which is provided to make the overall lens system compact. This focal length is extremely small for the focal length of the second component of the zoom lens of this kind and therefore, the amount of movement of the second lens component when in change of magnification is very small. The upper limit is the limit not to lose the effect. If exceeding the lower limit, the negative refractive power is surplus, and as a consequence, the correction of aberration becomes impossible every by the conditions (2) and thereafter conditions, and in addition, the variation of aberration resulting from the change of magnification increases, failing to obtain the zoom ratio of 6 times.

The condition (2) is provided to balance aberration by a powerful convex surface against a powerful negative refractive power. If exceeding the upper limit to increase R1, the influence caused by the negative refractive force of the second lens component inevitably results and the correction of the negative distortion aberration as a whole becomes impossible. Conversely, if exceeding the lower limit to decrease R1, the change of distortion aberration when in change of magnification increases, and the spherical aberration on the side of the long focus becomes under.

The condition (3) is provided to obtain the effect similar to that of the condition (2). If exceeding the upper limit to increase R6, the negative distortion aberration increases on the side of the short focus, bringing forth a deterioration of coma aberration. If exceeding the lower limit to decrease R6, a fall of the image plane towards the negative increases on the side of short focus.

The condition (4) is provided, with the arrangement wherein the third lens component comprises a single negative lens in order to simplify the structure of the lens system, to provide a great refractive index to minimize an occurence of aberration in this lens component and to prevent a reduction in Petzval's sum as a whole.

The third component moves towards the object, in the intermediate focal length, when in change of magnification, but when n7 is smaller than 1.6, the spherical aberration at the portion of the intermediate focal length is over with respect to portions of the long focal length and short focal length.

The condition (5) is provided to bring forth a good correction of spherical aberration with respect to a large aperture. The light emitted from the third lens component is formed into an emanation light flux, which is made afocal at the fourth lens component, but the light on the axis is high in incidence when it is incident upon the R17 surface, and therefore, the positive refractive power at said surface is not increased greatly to minimize an occurrence of spherical aberration in the whole region of change in magnification.

If exceeding the lower limit of the condition (5) to increase the positive refractive power, this would be preferable to reduce the telephoto ratio of the focusing system but the spherical aberration becomes excessively under. Conversely, if exceeding the upper limit to decrease the refractive power, it becomes difficult to reduce the telephoto ratio of the focusing system.

The condition (6) is provided to control an occurrence of spherical aberration in the whole region of change in magnification along with the condition (5). Unless this condition is not satisfied, the over spherical aberration increases, and it is impossible to make proper correction for the large aperture.

The condition (7) is provided to correct the influence of a powerful refractive power in the portion of magnification-change system. That is, in the lens system of this invention, the negative refractive power in the portion of magnification-change system is extremely great, and even if correction is made to the afocal condition in the fourth component, it is necessary to act a powerful positive refractive power on the front portion of the fifth component. Thereby, it is necessary to reduce the telephoto ratio of focusing system and at the same time to make correction of emanative coma aberration and distortion aberration which deteriorates in a negative direction. According to this condition, the refractive index of the positive lens is decreased to thereby increase the effect thereof and at the same time, a decrease in Petzval's sum may be advantageously prevented.

The condition (8) relates to the emanation value of glass for properly correcting the chromatic aberration in the overall system under the aforsaid conditions. Unless the condition (8)-(a) is satisfied, it is not possible to impart a great positive refractive power to the front portion of the focusing system. The condition (8)-(b) is provided to correct the chromatic aberration of magnification as well. Unless this condition is satisfied, longitudinal achromatizing can be made but lateral achromatizing remains greatly.

## BRIEF DESCRIPTION OF THE DRAWINGS

Fig. 1 is a structural view of lenses in Embodiments 1 to 5 and Embodiments 7 and 8;

Fig. 2 is a structural view of a lens in Embodiment 6;

Fig. 3 is a structural view of lenses in Embodiments 9 and 10;

Figs. 4 to 6 show a curve of aberration in Embodiment 1;

Figs. 7 to 9 show a curve of aberration in Embodiment 2; and likewise,

Figs. 10 to 12 show a curve of aberration in Embodiment 3, Figs. 13 to 15 that of Embodiment 4, Figs. 16 to 18 that of Embodiment 5, Figs. 19 to 21 that of Embodiment 6, Figs. 22 to 24 that of Embodiment 7, Figs. 25 to 27 that of Embodiment 8, Figs. 28 to 30 that of Embodiment 9, and Figs. 31 to 33 that of Embodiment 10.

## DETAILED DESCRIPTION OF THE PREFERRED EMBODIMENTS

In the following, embodiments of zoom lenses which are satisfied with the aforementioned conditions are shown.

Embodiment 1

$f = 11.5 \sim 69.0$     $fb = 16.84$     $F = 1.34 \sim 1.44$

| No | R | d | nd | $\nu$ |
|----|-----|-----|-----|-----|
| 1 | 65.965 | 1.50 | 1.80518 | 25.4 |
| 2 | 39.110 | 9.50 | 1.58913 | 61.1 |
| 3 | ∞ | 0.20 | | |
| 4 | 43.884 | 6.45 | 1.51633 | 64.1 |
| 5 | 251.236 | variable | | |
| 6 | 134.809 | 0.80 | 1.71300 | 53.9 |
| 7 | 15.994 | 5.00 | | |
| 8 | −24.268 | 0.80 | 1.69680 | 55.5 |
| 9 | 19.190 | 3.30 | 1.80518 | 25.4 |
| 10 | 708.645 | variable | | |
| 11 | −22.135 | 0.80 | 1.71300 | 53.9 |
| 12 | −74.693 | variable | | |
| 13 | −107.724 | 3.55 | 1.51633 | 64.1 |
| 14 | −23.128 | 0.10 | | |
| 15 | 75.436 | 3.45 | 1.51633 | 64.1 |
| 16 | −58.452 | 6.10 | | |
| 17 | 34.083 | 4.30 | 1.51633 | 64.1 |
| 18 | −106.556 | 0.30 | | |
| 19 | 22.407 | 3.10 | 1.51633 | 64.1 |
| 20 | 57.714 | 1.88 | | |
| 21 | −67.639 | 1.00 | 1.80518 | 25.4 |
| 22 | 51.543 | 13.91 | | |
| 23 | 56.087 | 1.00 | 1.80518 | 25.4 |
| 24 | 23.354 | 1.60 | | |
| 25 | 52.078 | 3.30 | 1.71300 | 53.9 |
| 26 | −32.174 | 0.30 | | |
| 27 | 23.828 | 2.33 | 1.71300 | 53.9 |
| 28 | 52.252 | | | |

| f | 11.504 | 28.830 | 69.065 |
|-----|-----|-----|-----|
| d5 | 1.196 | 20.199 | 31.196 |
| d10 | 32.215 | 9.669 | 2.215 |
| d12 | 1.070 | 4.613 | 1.070 |

Embodiment 2

f = 11.5 ~ 69.0    fb = 16.56    F = 1.34 ~ 1.44

| No | R | d | nd | $\nu$ |
|----|---|---|-----|----|
| 1 | 65.946 | 1.50 | 1.80518 | 25.4 |
| 2 | 39.612 | 9.60 | 1.58913 | 61.1 |
| 3 | -2,858.955 | 0.20 | | |
| 4 | 43.962 | 6.30 | 1.51633 | 64.1 |
| 5 | 213.936 | variable | | |
| 6 | 99.228 | 0.80 | 1.71300 | 53.9 |
| 7 | 16.130 | 5.00 | | |
| 8 | -23.958 | 0.80 | 1.69680 | 55.5 |
| 9 | 19.544 | 3.30 | 1.80518 | 25.4 |
| 10 | 300.020 | variable | | |
| 11 | -21.635 | 0.80 | 1.71300 | 53.9 |
| 12 | -72.558 | variable | | |
| 13 | -133.903 | 3.50 | 1.51633 | 64.1 |
| 14 | -23.644 | 0.10 | | |
| 15 | 58.540 | 3.40 | 1.51633 | 64.1 |
| 16 | -73.186 | 6.10 | | |
| 17 | 41.161 | 4.30 | 1.51633 | 64.1 |
| 18 | -75.691 | 0.30 | | |
| 19 | 25.741 | 3.30 | 1.51633 | 64.1 |
| 20 | 95.220 | 1.90 | | |
| 21 | -47.471 | 1.00 | 1.80518 | 25.4 |
| 22 | 95.989 | 13.70 | | |
| 23 | 78.415 | 1.00 | 1.80518 | 25.4 |
| 24 | 23.437 | 1.60 | | |
| 25 | 42.067 | 3.30 | 1.72000 | 50.2 |
| 26 | -31.552 | 0.30 | | |
| 27 | 29.130 | 2.60 | 1.69680 | 55.5 |
| 28 | 81.432 | | | |

| f | 11.498 | 29.128 | 69.000 |
|-----|--------|--------|--------|
| d5 | 1.200 | 20.363 | 31.200 |
| d10 | 32.350 | 9.730 | 2.350 |
| d12 | 1.100 | 4.557 | 1.100 |

Embodiment 3

f = 11.490     fb = 16.10     f = 1.34 ~ 1.44

| No | R | d | nd | $\nu$ |
|----|------|-----|------|------|
| 1 | 67.571 | 1.50 | 1.80518 | 25.4 |
| 2 | 40.282 | 9.60 | 1.58913 | 61.1 |
| 3 | −726.993 | 0.20 | | |
| 4 | 42.844 | 6.30 | 1.48749 | 70.1 |
| 5 | 192.889 | variable | | |
| 6 | 65.946 | 0.80 | 1.69680 | 55.5 |
| 7 | 15.321 | 5.00 | | |
| 8 | −22.581 | 0.80 | 1.69680 | 55.5 |
| 9 | 19.606 | 3.30 | 1.80518 | 25.4 |
| 10 | 264.645 | variable | | |
| 11 | −21.559 | 0.80 | 1.71300 | 53.9 |
| 12 | −74.514 | variable | | |
| 13 | −130.118 | 3.50 | 1.51633 | 64.1 |
| 14 | −23.695 | 0.10 | | |
| 15 | 59.216 | 3.40 | 1.51633 | 64.1 |
| 16 | −68.314 | 6.10 | | |
| 17 | 40.256 | 4.30 | 1.51633 | 64.1 |
| 18 | −96.740 | 0.30 | | |
| 19 | 27.775 | 3.30 | 1.51633 | 64.1 |
| 20 | 133.597 | 1.90 | | |
| 21 | −47.978 | 1.00 | 1.80518 | 25.4 |
| 22 | 135.689 | 13.80 | | |
| 23 | 67.541 | 1.00 | 1.80518 | 25.4 |
| 24 | 21.830 | 1.60 | | |
| 25 | 37.194 | 3.30 | 1.69680 | 55.5 |
| 26 | −30.473 | 0.30 | | |
| 27 | 23.599 | 2.60 | 1.72000 | 50.2 |
| 28 | 40.839 | | | |

| f | 11.490 | 29.119 | 69.004 |
|----|------|------|------|
| d5 | 1.200 | 20.360 | 31.200 |
| d10 | 32.350 | 9.730 | 2.350 |
| d12 | 1.100 | 4.560 | 1.100 |

Embodiment 4

$f = 11.5 \sim 69.0$    $fb = 16.92$    $F = 1.34 \sim 1.44$

| No | R | d | nd | $\nu$ |
|---|---|---|---|---|
| 1 | 126.045 | 1.60 | 1.74077 | 27.8 |
| 2 | 44.877 | 10.30 | 1.62299 | 58.2 |
| 3 | -207.630 | 0.15 | | |
| 4 | 38.742 | 6.40 | 1.60311 | 60.7 |
| 5 | 124.016 | variable | | |
| 6 | 193.120 | 0.90 | 1.69680 | 55.5 |
| 7 | 15.466 | 5.00 | | |
| 8 | -24.660 | 0.90 | 1.69680 | 55.5 |
| 9 | 19.043 | 3.50 | 1.80518 | 25.4 |
| 10 | 396.548 | variable | | |
| 11 | -22.561 | 0.90 | 1.71700 | 47.9 |
| 12 | -64.407 | variable | | |
| 13 | -161.632 | 3.60 | 1.51633 | 64.1 |
| 14 | -26.269 | 0.10 | | |
| 15 | 59.891 | 3.20 | 1.58913 | 61.0 |
| 16 | -100.115 | 6.50 | | |
| 17 | 32.613 | 5.00 | 1.51633 | 64.1 |
| 18 | -80.319 | 0.20 | | |
| 19 | 22.608 | 5.50 | 1.51633 | 64.1 |
| 20 | 95.210 | 1.75 | | |
| 21 | -42.763 | 1.80 | 1.80518 | 25.4 |
| 22 | 38.486 | 6.90 | | |
| 23 | 124.488 | 1.70 | 1.80518 | 25.4 |
| 24 | 26.570 | 2.50 | | |
| 25 | 118.888 | 3.90 | 1.71700 | 47.9 |
| 26 | -23.785 | 0.20 | | |
| 27 | 24.882 | 3.50 | 1.72000 | 43.7 |
| 28 | 73.991 | | | |

| f | 11.503 | 29.603 | 69.011 |
|---|---|---|---|
| d5 | 1.345 | 20.002 | 30.045 |
| d10 | 31.200 | 8.461 | 2.499 |
| d12 | 1.199 | 5.281 | 1.199 |

Embodiment 5 — 14 —

f = 11.5 ~ 69.0    fb = 15.74    F = 1.42 ~ 1.48

| No | R | d | nd | $\nu$ |
|----|----|----|----|----|
| 1 | 133.570 | 1.70 | 1.78470 | 26.2 |
| 2 | 49.902 | 9.00 | 1.62299 | 58.2 |
| 3 | -271.975 | 0.10 | | |
| 4 | 40.750 | 6.60 | 1.62299 | 58.2 |
| 5 | 143.409 | variable | | |
| 6 | 220.611 | 1.20 | 1.69680 | 55.5 |
| 7 | 15.419 | 5.00 | | |
| 8 | -27.758 | 1.10 | 1.69680 | 55.5 |
| 9 | 21.896 | 3.50 | 1.80518 | 25.4 |
| 10 | 4,617.412 | variable | | |
| 11 | -23.705 | 1.20 | 1.78590 | 44.2 |
| 12 | -60.605 | variable | | |
| 13 | -81.411 | 3.20 | 1.51633 | 64.1 |
| 14 | -26.940 | 0.10 | | |
| 15 | 51.525 | 3.20 | 1.51633 | 64.1 |
| 16 | -67.096 | 6.50 | | |
| 17 | 34.612 | 4.30 | 1.62299 | 58.2 |
| 18 | -168.110 | 0.50 | | |
| 19 | 24.388 | 5.20 | 1.62299 | 58.2 |
| 20 | 71.842 | 1.20 | | |
| 21 | -79.594 | 1.80 | 1.78470 | 26.2 |
| 22 | 52.186 | 6.80 | | |
| 23 | 461.081 | 1.60 | 1.80518 | 25.4 |
| 24 | 21.041 | 2.50 | | |
| 25 | 354.014 | 3.70 | 1.69350 | 53.2 |
| 25 | -28.444 | 0.20 | | |
| 27 | 22.246 | 3.50 | 1.65844 | 50.9 |
| 28 | 3,343.033 | | | |

| | | | |
|----|----|----|----|
| f | 11.500 | 30.061 | 69.010 |
| d5 | 2.000 | 22.260 | 32.800 |
| d10 | 33.600 | 9.200 | 2.800 |
| d12 | 1.000 | 5.140 | 1.000 |

Embodiment 6

f = 11.5 ~ 69.0      fb = 16.14      F = 1.42 ~ 1.48

| No | R | d | nd | ν |
|----|------|------|------|------|
| 1 | 147.578 | 1.70 | 1.74077 | 27.8 |
| 2 | 47.144 | 9.50 | 1.62299 | 58.2 |
| 3 | -210.938 | 0.10 | | |
| 4 | 40.276 | 6.60 | 1.60311 | 60.7 |
| 5 | 133.012 | variable | | |
| 6 | 186.577 | 1.20 | 1.69680 | 55.5 |
| 7 | 15.897 | 5.00 | | |
| 8 | -26.729 | 1.10 | 1.69680 | 55.5 |
| 9 | 21.644 | 3.50 | 1.80518 | 25.4 |
| 10 | 843.015 | variable | | |
| 11 | -22.422 | 1.00 | 1.71300 | 53.8 |
| 12 | -61.221 | variable | | |
| 13 | -118.164 | 3.20 | 1.51633 | 64.1 |
| 14 | -26.348 | 0.10 | | |
| 15 | 74.072 | 3.20 | 1.58913 | 61.0 |
| 16 | -76.101 | 6.50 | | |
| 17 | 26.945 | 6.80 | 1.48749 | 70.1 |
| 18 | -508.571 | 0.20 | | |
| 19 | 17.246 | 6.80 | 1.48749 | 70.1 |
| 20 | 38.924 | 4.00 | | |
| 21 | -36.662 | 1.50 | 1.84666 | 23.9 |
| 22 | 18.419 | 4.00 | | |
| 23 | -124.859 | 3.50 | 1.69680 | 55.5 |
| 24 | -21.690 | 0.10 | | |
| 25 | 27.935 | 4.00 | 1.69680 | 55.5 |
| 26 | -84.350 | | | |

| f | 11.500 | 30.069 | 69.004 |
|-----|--------|--------|--------|
| d5 | 1.500 | 21.760 | 32.300 |
| d10 | 33.600 | 9.200 | 2.800 |
| d12 | 1.200 | 5.340 | 1.200 |

Embodiment 7

f = 8.0 ~ 48.0        fb = 12.59        FNO. = 1.23

| No | R | d | nd | ν |
|---|---|---|---|---|
| 1 | 57.439 | 1.40 | 1.80518 | 25.4 |
| 2 | 31.940 | 9.00 | 1.58913 | 61.1 |
| 3 | -382.919 | 0.20 | | |
| 4 | 27.587 | 6.80 | 1.51633 | 64.1 |
| 5 | 109.331 | variable | | |
| 6 | 95.819 | 0.70 | 1.71300 | 53.9 |
| 7 | 10.506 | 4.20 | | |
| 8 | -16.436 | 0.70 | 1.69680 | 55.5 |
| 9 | 14.400 | 2.70 | 1.80518 | 25.4 |
| 10 | -1,399.957 | variable | | |
| 11 | -14.947 | 0.70 | 1.71300 | 53.9 |
| 12 | -61.261 | variable | | |
| 13 | -90.231 | 3.20 | 1.51633 | 64.1 |
| 14 | -16.482 | 0.10 | | |
| 15 | 49.257 | 3.20 | 1.51633 | 64.1 |
| 16 | -43.530 | 7.10 | | |
| 17 | 28.717 | 3.60 | 1.51633 | 64.1 |
| 18 | -74.154 | 0.30 | | |
| 19 | 18.289 | 2.60 | 1.51633 | 64.1 |
| 20 | 66.894 | 1.90 | | |
| 21 | -31.778 | 1.00 | 1.80518 | 25.4 |
| 22 | 106.474 | 6.00 | | |
| 23 | 755.190 | 1.00 | 1.80518 | 25.4 |
| 24 | 21.178 | 2.00 | | |
| 25 | 86.781 | 3.20 | 1.71300 | 53.9 |
| 26 | -18.150 | 0.30 | | |
| 27 | 18.398 | 2.60 | 1.71300 | 53.9 |
| 28 | 58.611 | | | |

| f | 8.000 | 16.935 | 48.000 |
|---|---|---|---|
| d5 | 1.200 | 12.006 | 21.100 |
| d10 | 22.100 | 9.468 | 2.200 |
| d12 | 1.100 | 2.926 | 1.100 |

Embodiment 8

f = 8.0 ~ 48.0    fb = 12.92    ENO. = 1.4

| No | R | d | nd | $\nu$ |
|---|---|---|---|---|
| 1 | 50.012 | 1.30 | 1.80518 | 25.4 |
| 2 | 28.899 | 7.80 | 1.58913 | 61.1 |
| 3 | -1,479.989 | 0.20 | | |
| 4 | 27.057 | 5.90 | 1.51633 | 64.1 |
| 5 | 115.040 | variable | | |
| 6 | 46.322 | 0.70 | 1.71300 | 53.9 |
| 7 | 9.976 | 4.10 | | |
| 8 | -14.573 | 0.70 | 1.69680 | 55.5 |
| 9 | 14.077 | 2.40 | 1.80518 | 25.4 |
| 10 | 1,169.022 | variable | | |
| 11 | -17.898 | 0.70 | 1.71300 | 53.9 |
| 12 | -2,524.754 | variable | | |
| 13 | -72.443 | 3.00 | 1.51633 | 64.1 |
| 14 | -14.308 | 0.10 | | |
| 15 | 56.377 | 2.55 | 1.51633 | 64.1 |
| 16 | -38.106 | 7.10 | | |
| 17 | 21.136 | 3.16 | 1.51633 | 64.1 |
| 18 | -250.501 | 0.30 | | |
| 19 | 17.946 | 2.28 | 1.51633 | 64.1 |
| 20 | 51.698 | 1.67 | | |
| 21 | -44.462 | 0.90 | 1.80518 | 25.4 |
| 22 | 56.889 | 6.30 | | |
| 23 | 431.119 | 0.90 | 1.80518 | 25.4 |
| 24 | 18.925 | 1.76 | | |
| 25 | 106.556 | 2.80 | 1.71300 | 53.9 |
| 26 | -17.697 | 0.30 | | |
| 27 | 21.535 | 2.28 | 1.71300 | 53.9 |
| 28 | 643.100 | | | |

| f | 7.998 | 20.292 | 48.000 |
|---|---|---|---|
| d5 | 1.100 | 13.516 | 20.500 |
| d10 | 20.800 | 6.529 | 1.400 |
| d12 | 1.100 | 2.955 | 1.100 |

Embodiment 9

f = 8.0 ~ 48.0    fb = 12.55    FNO. = 1.23

| No | R | d | nd | $\nu$ |
|---|---|---|---|---|
| 1 | 54.017 | 1.50 | 1.80518 | 25.4 |
| 2 | 31.062 | 9.80 | 1.58913 | 61.1 |
| 3 | -1,454.702 | 0.20 | | |
| 4 | 28.089 | 7.40 | 1.51633 | 64.1 |
| 5 | 120.227 | variable | | |
| 6 | 99.442 | 0.70 | 1.71300 | 53.9 |
| 7 | 10.407 | 4.35 | | |
| 8 | -17.166 | 0.70 | 1.69680 | 55.5 |
| 9 | 14.857 | 2.70 | 1.80518 | 25.4 |
| 10 | -4,549.459 | variable | | |
| 11 | -14.982 | 0.70 | 1.71300 | 53.9 |
| 12 | -60.428 | variable | | |
| 13 | -81.661 | 3.20 | 1.51633 | 64.1 |
| 14 | -16.575 | 0.10 | | |
| 15 | 45.287 | 3.20 | 1.51633 | 64.1 |
| 16 | -44.921 | 0.50 | | |
| | ∞ | 8.20 | 1.51633 | 64.1 |
| prism | ∞ | 6.60 | | |
| 17 | 29.136 | 3.60 | 1.51633 | 64.1 |
| 18 | -64.459 | 0.30 | | |
| 19 | 18.820 | 2.60 | 1.51633 | 64.1 |
| 20 | 85.722 | 1.90 | | |
| 21 | -26.960 | 1.00 | 1.80518 | 25.4 |
| 22 | 101.456 | 5.50 | | |
| 23 | 118.614 | 1.00 | 1.80518 | 25.4 |
| 24 | 22.105 | 2.00 | | |
| 25 | 108.129 | 3.20 | 1.71300 | 53.9 |
| 26 | -17.659 | 0.30 | | |
| 27 | 19.500 | 2.60 | 1.71300 | 53.9 |
| 28 | 57.645 | | | |

| f | 8.000 | 18.086 | 48.001 |
|---|---|---|---|
| d5 | 1.200 | 12.747 | 21.100 |
| d10 | 21.800 | 8.301 | 1.900 |
| d12 | 1.100 | 3.052 | 1.100 |

0081997

Embodiment 10

f = 8.0 ~ 48.0        fb = 12.95        F = 1.4

| No | R | d | nd | $\nu$ |
|---|---|---|---|---|
| 1 | 52.974 | 1.30 | 1.80518 | 25.4 |
| 2 | 30.312 | 8.60 | 1.58913 | 61.1 |
| 3 | -1,018.401 | 0.20 | | |
| 4 | 26.942 | 6.80 | 1.51633 | 64.1 |
| 5 | 114.775 | variable | | |
| 6 | 111.189 | 0.70 | 1.71300 | 53.9 |
| 7 | 10.425 | 4.20 | | |
| 8 | -16.719 | 0.70 | 1.69680 | 55.5 |
| 9 | 14.860 | 2.40 | 1.80518 | 25.4 |
| 10 | 1,935.348 | variable | | |
| 11 | -15.141 | 0.70 | 1.71300 | 53.9 |
| 12 | -62.787 | variable | | |
| 13 | -51.183 | 2.80 | 1.51633 | 64.1 |
| 14 | -14.524 | 0.10 | | |
| 15 | 62.147 | 2.55 | 1.51633 | 64.1 |
| 16 | -35.732 | 0.50 | | |
| prism | ∞ | 7.90 | 1.51633 | 64.1 |
| | ∞ | 6.60 | | |
| 17 | 18.540 | 3.16 | 1.51633 | 64.1 |
| 18 | -310.292 | 0.30 | | |
| 19 | 22.388 | 2.28 | 1.51633 | 64.1 |
| 20 | 68.079 | 1.67 | | |
| 21 | -29.409 | 0.90 | 1.80518 | 25.4 |
| 22 | 81.677 | 6.70 | | |
| 23 | 62.273 | 0.90 | 1.80518 | 25.4 |
| 24 | 18.408 | 1.76 | | |
| 25 | 74.602 | 2.80 | 1.71300 | 53.9 |
| 26 | -18.145 | 0.30 | | |
| 27 | 19.698 | 2.28 | 1.71300 | 53.9 |
| 28 | 67.218 | | | |

| f | 8.000 | 20.188 | 48.000 |
|---|---|---|---|
| d5 | 1.100 | 13.516 | 20.500 |
| d10 | 21.200 | 6.674 | 1.800 |
| d12 | 1.100 | 3.210 | 1.100 |

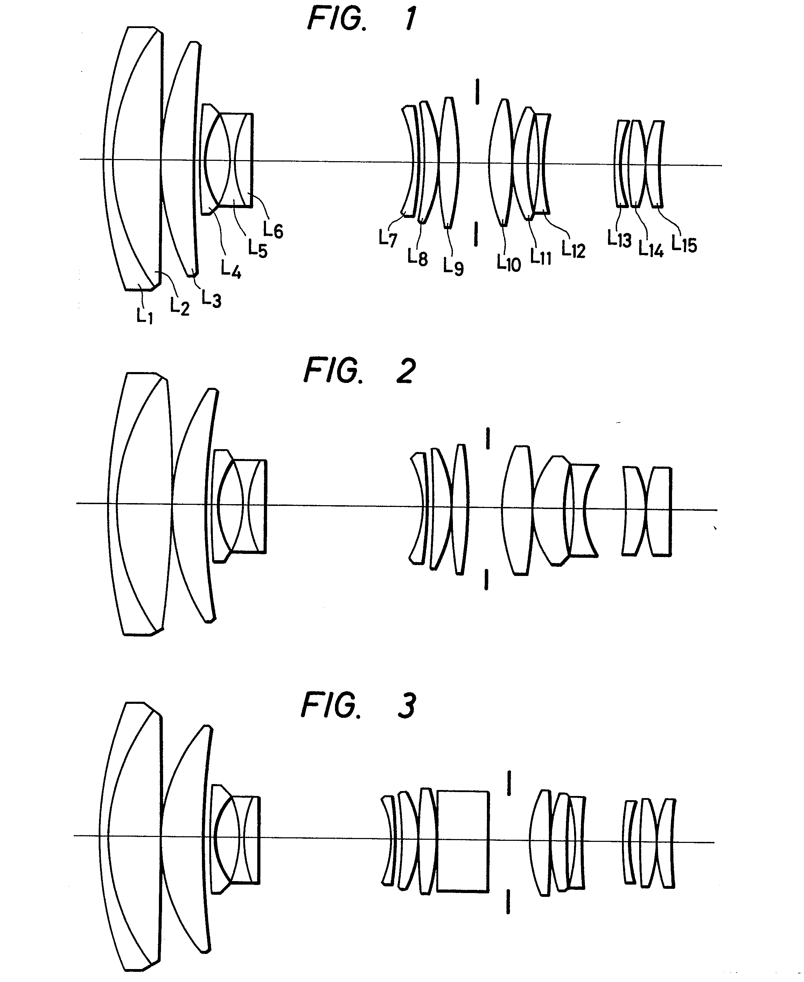

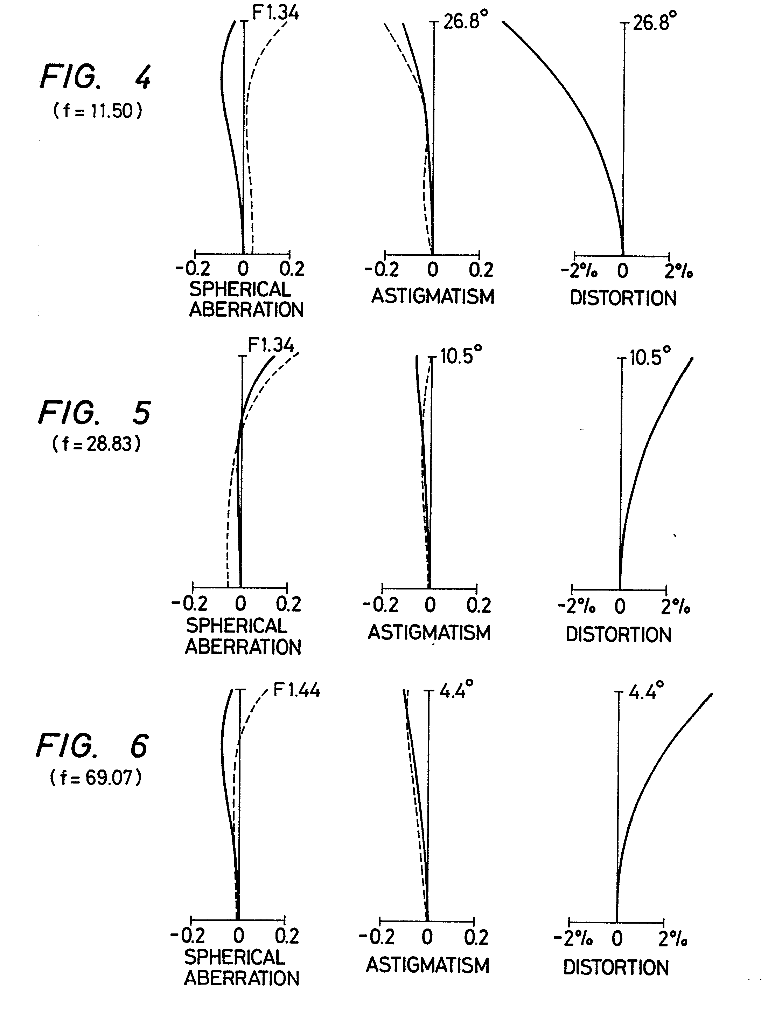

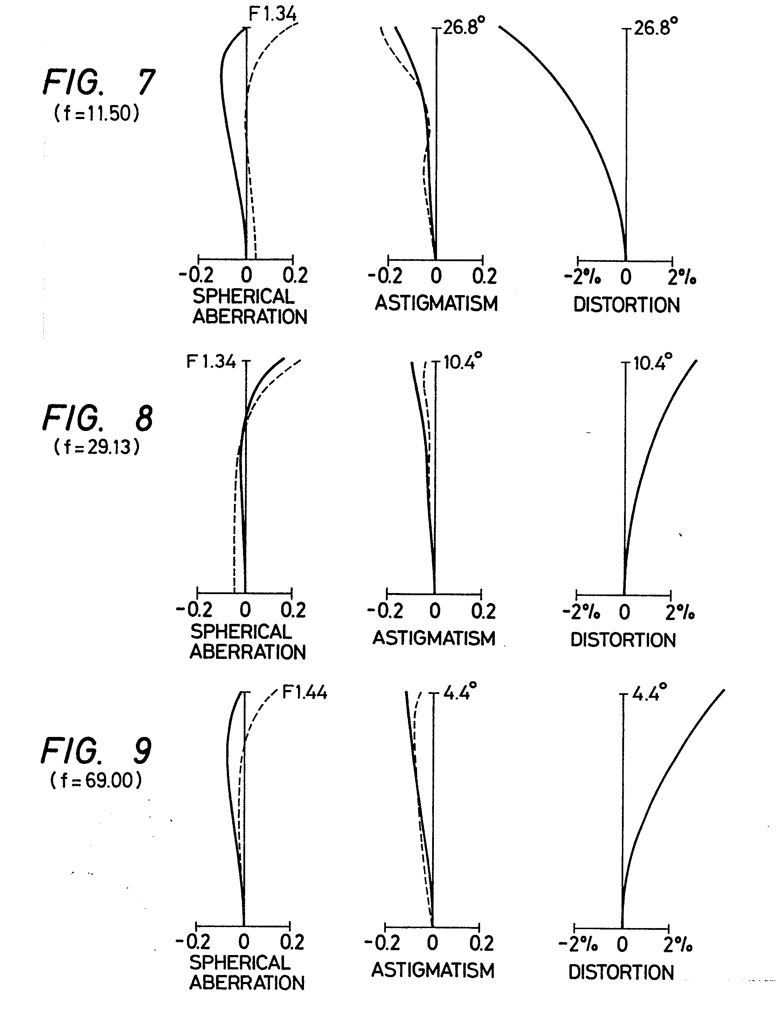

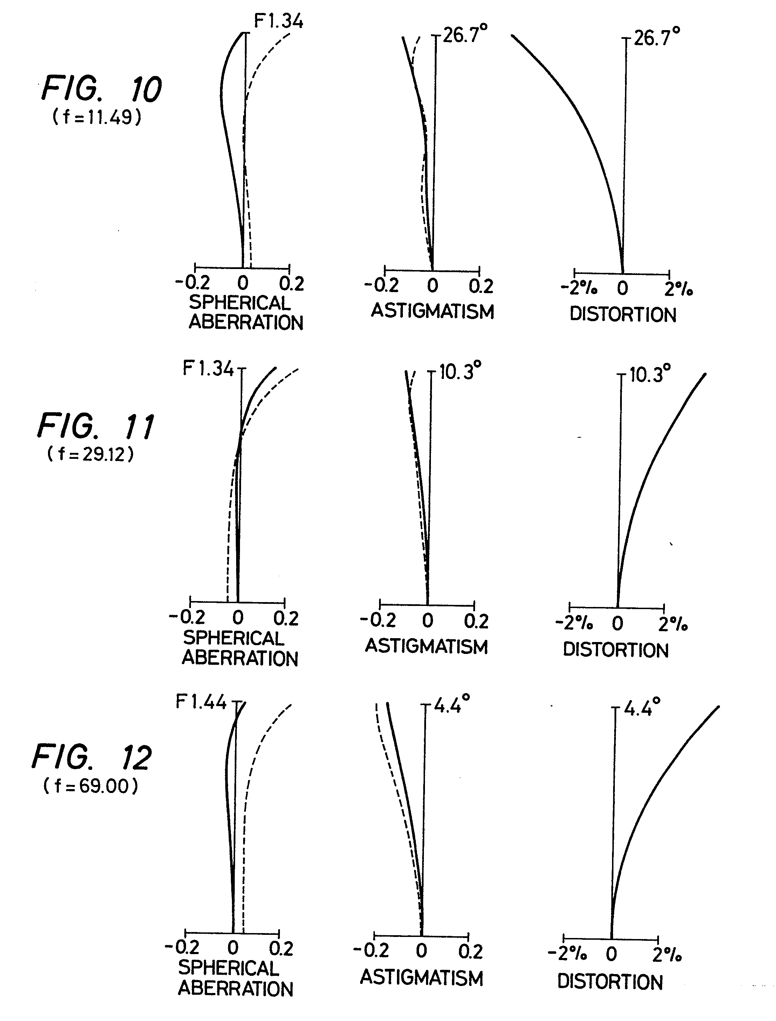

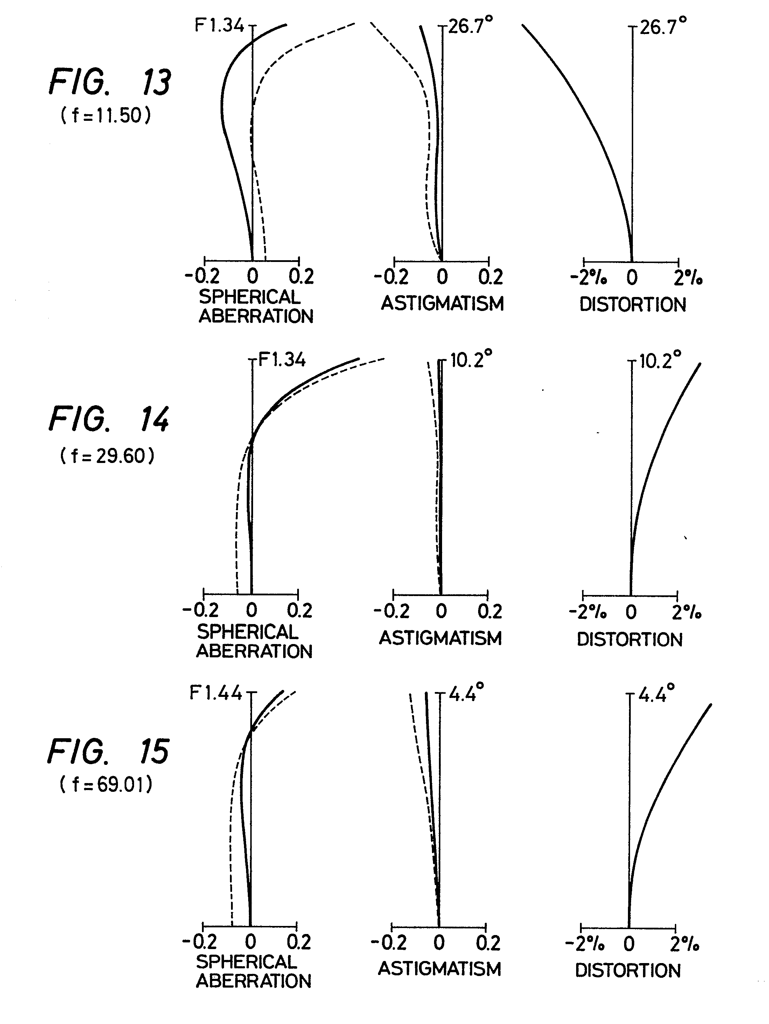

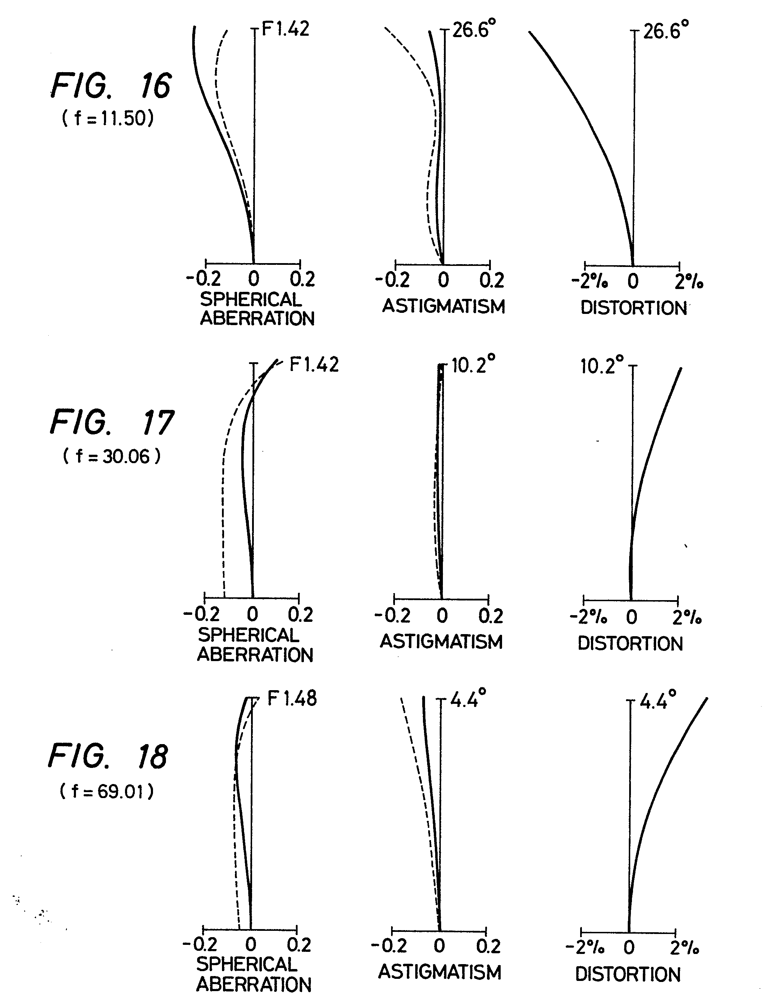

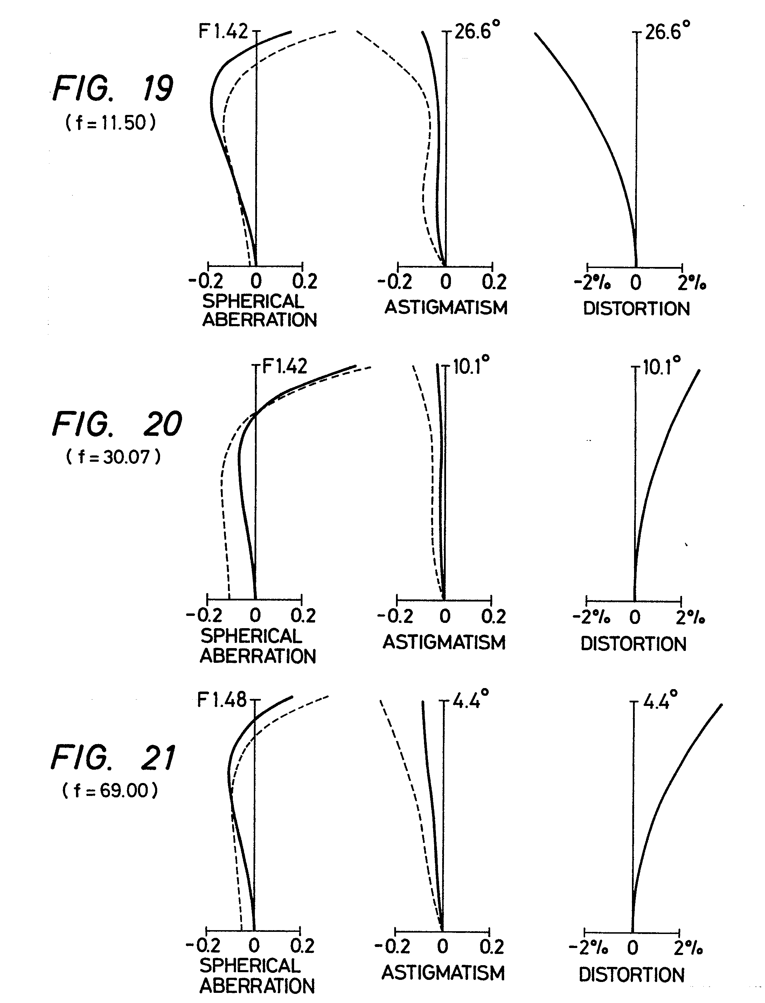

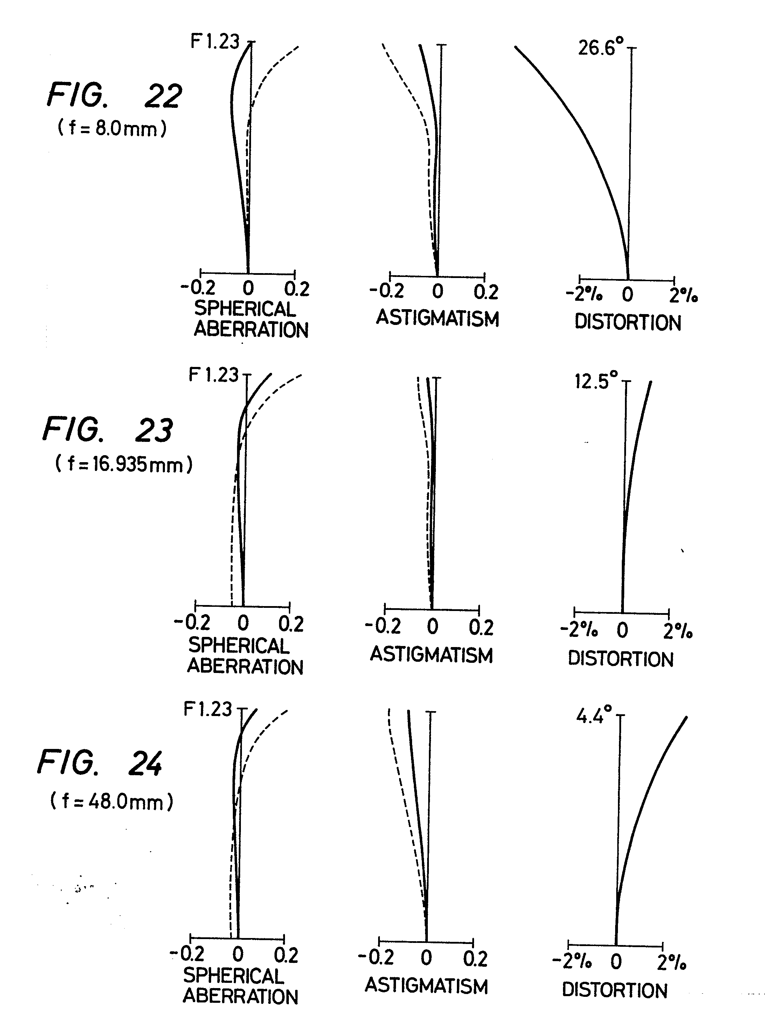

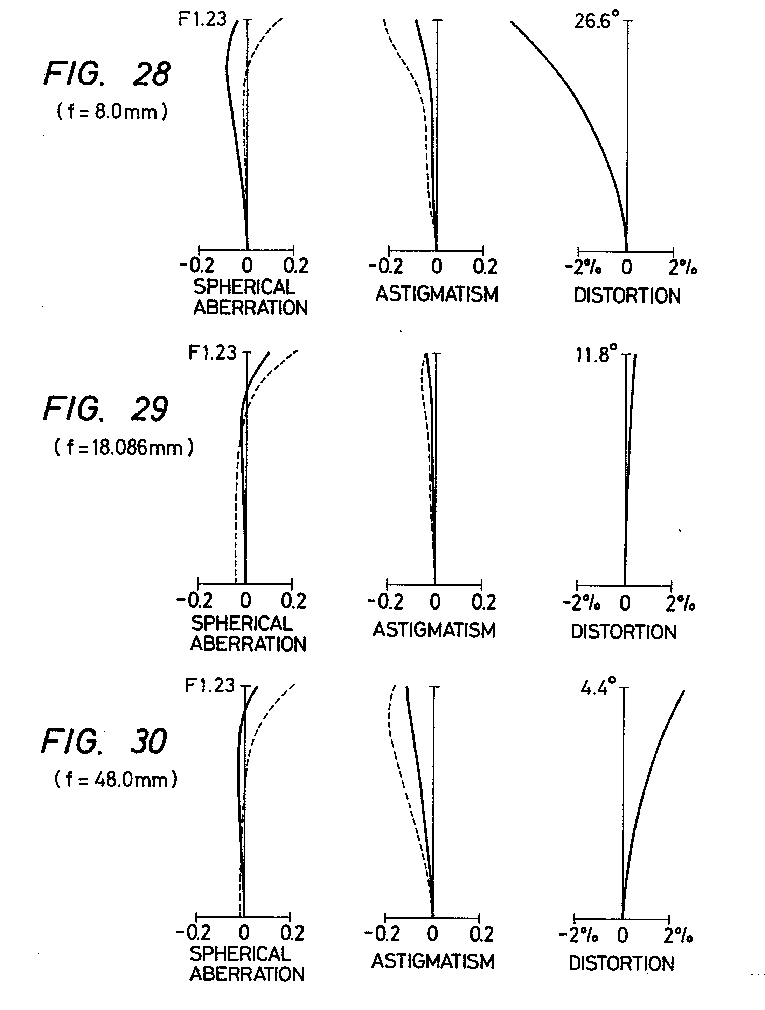

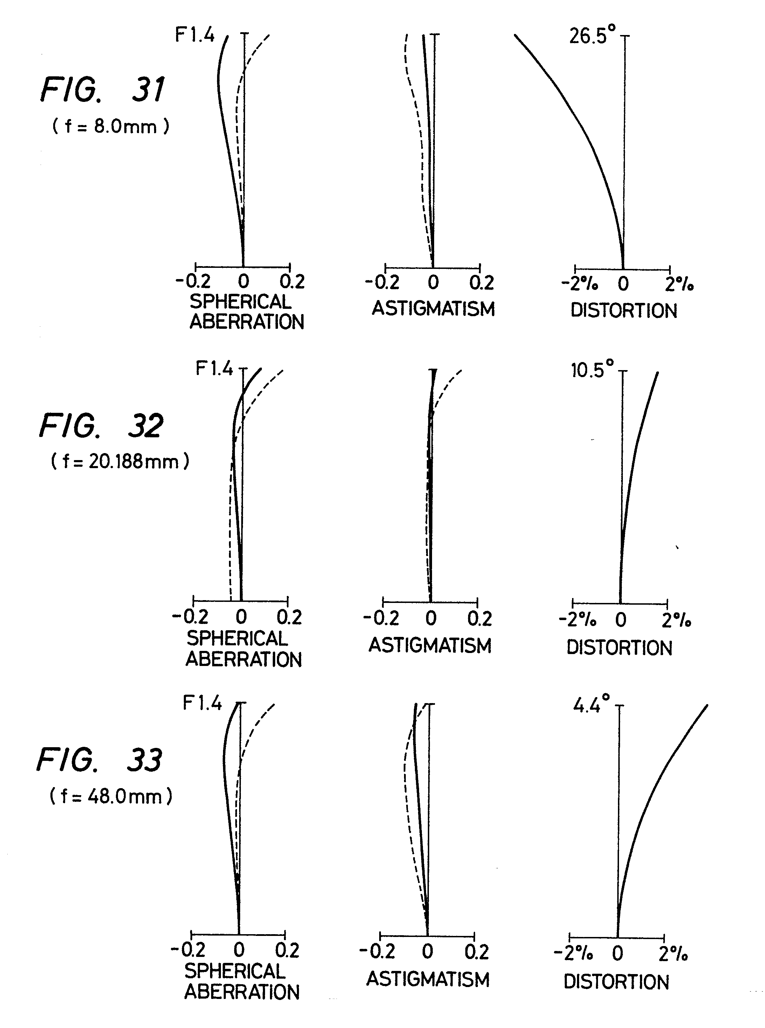

Structural views of lenses in the embodiments are shown in Figs. 1, 2 and 3, and aberration views are shown in Figs. 4 to 33.  In each embodiment, cover glasses of thickness 6mm in embodiments 1 to 4 and 4mm in embodiments 5 to 10, nd = 1.5163, $\nu$d = 64.1 are provided on the focusing surface.

WHAT IS CLAIMED IS:

1. A compact zoom lens comprising, orderly from an object side,

a positive first lens component, a negative second lens component, a negative third lens component, a positive fourth lens component, and a positive fifth lens component with an aperture or a prism and the aperture interposed between lenses,

the first lens component having a function of focusing, the second lens component being moved along with zooming and principally having the action of changing the focal length, the third lens component being moved resulting from zooming to thereby principally have the action for maintaining the focal position constant, the fourth lens component having the action of correcting an emantion light flux afocal, said flux being emitted from a zoom system comprising the first, the second and the third lens components, and the fifth lens component serving as a focusing system,

the first lens component comprising two groups and three lenses, i.e., a positive lens in which a negative meniscus lens $L_1$ and a positive lens $L_2$ are joined and a positive lens $L_3$ with a convex directed towards the object, the second lens component comprising two groups and three lenses, i.e., a negative meniscus lens $L_4$ with a concave directed towards the image and a negative lens in which a dual concave lens $L_5$ and a positive lens $L_6$ are joined, the third lens component comprising a single group and a single lens, i.e., a negative single lens $L_7$ with a concave directed towards the object, the fourth lens component comprising two groups and two lenses, i.e., a positive lens $L_8$ with a convex directed towards the image and a dual convex lens $L_9$, and the fifth lens component with an aperture or a prism and the aperture interposed between lenses comprising five groups and five lenses, i.e., a positive lens $L_{10}$ with a convex directed towards the object, a meniscus positive lens $L_{11}$ with a convex directed towards the object, a negative lens $L_{12}$ with a concave directed towards the object, a positive lens $L_{14}$ with a convex directed towards the image and positive lens $L_{15}$ with a convex directed towards the object, or six groups and six lens which comprises a further negative lens $L_{13}$ with a concave directed towards the image between the negative lens $L_{12}$ and positive lens $L_{14}$, said zoom lens being characterized by being satisfied with the conditions below:

$$1.0\ fw\ <\ |fII|\ <\ 1.6\ fw \qquad fII\ <\ 0 \quad \ldots\ (1)$$
$$0.8\ fI\ <\ R1\ <\ 3.0\ fl \qquad\qquad\qquad \ldots\ (2)$$
$$3.0\ |fII| <\ R6\ <\ 30\ |fII| \qquad\qquad\ \ldots\ (3)$$
$$1.6\ <\ n7 \qquad\qquad\qquad\qquad\qquad \ldots\ (4)$$
$$1.2\ fV\ <\ f17\ <\ 4.0\ fV \qquad\qquad\ \ldots\ (5)$$
$$1.7\ <\ n12 \qquad\qquad\qquad\qquad\qquad \ldots\ (6)$$
$$n10,\ n11 <\ 1.65 \qquad\qquad\qquad\quad\ \ldots\ (7)$$

$$55 \quad < \quad \nu 10, \nu 11 \qquad \dots (8)-(a)$$

$$\nu 14 + \nu 15 < \nu 10 + \nu 11 \qquad \dots (8)-(b)$$

where

fw: focal length at the wide angle end of the overall system

fI: focal length of the first lens component

fII: focal length of the second lens component

fV: focal length of the fifth lens component

f17: focal length of surface nearest to the object of the fifth lens component

Ri: radius of curvature of the $i^{th}$ lens surface from the object

ni: refractive index of the $i^{th}$ lens material from the object

$\nu$i: number of Abbe of the $i^{th}$ lens material from the object.

2.   The zoom lens system according to Claim 1 which is illustrated by data as follows:

f = 11.5 ~ 69.0      fb = 16.84      F = 1.34 ~ 1.44

| No | R | d | nd | $\nu$ |
|---|---|---|---|---|
| 1 | 65.965 | 1.50 | 1.80518 | 25.4 |
| 2 | 39.110 | 9.50 | 1.58913 | 61.1 |
| 3 | $\infty$ | 0.20 | | |
| 4 | 43.884 | 6.45 | 1.51633 | 64.1 |
| 5 | 251.236 | variable | | |
| 6 | 134.809 | 0.80 | 1.71300 | 53.9 |
| 7 | 15.994 | 5.00 | | |
| 8 | -24.268 | 0.80 | 1.69680 | 55.5 |
| 9 | 19.190 | 3.30 | 1.80518 | 25.4 |
| 10 | 708.645 | variable | | |
| 11 | -22.135 | 0.80 | 1.71300 | 53.9 |
| 12 | -74.693 | variable | | |
| 13 | -107.724 | 3.55 | 1.51633 | 64.1 |
| 14 | -23.128 | 0.10 | | |
| 15 | 75.436 | 3.45 | 1.51633 | 64.1 |
| 16 | -58.452 | 6.10 | | |
| 17 | 34.083 | 4.30 | 1.51633 | 64.1 |
| 18 | -106.556 | 0.30 | | |
| 19 | 22.407 | 3.10 | 1.51633 | 64.1 |
| 20 | 57.714 | 1.88 | | |
| 21 | -67.639 | 1.00 | 1.80518 | 25.4 |
| 22 | 51.543 | 13.91 | | |
| 23 | 56.087 | 1.00 | 1.80518 | 25.4 |
| 24 | 23.354 | 1.60 | | |
| 25 | 52.078 | 3.30 | 1.71300 | 53.9 |
| 26 | -32.174 | 0.30 | | |
| 27 | 23.828 | 2.33 | 1.71300 | 53.9 |
| 28 | 52.252 | | | |

| f | 11.504 | 28.830 | 69.065 |
|---|---|---|---|
| d5 | 1.196 | 20.199 | 31.196 |
| d10 | 32.215 | 9.669 | 2.215 |
| d12 | 1.070 | 4.613 | 1.070 |

3.  The zoom lens system according to Claim 1 which is illustrated by data as follows:

f = 11.5 ~ 69.0        fb = 16.56        F = 1.34 ~ 1.44

| No | R | d | nd | $\nu$ |
|---|---|---|---|---|
| 1 | 65.946 | 1.50 | 1.80518 | 25.4 |
| 2 | 39.612 | 9.60 | 1.58913 | 61.1 |
| 3 | -2,858.955 | 0.20 | | |
| 4 | 43.962 | 6.30 | 1.51633 | 64.1 |
| 5 | 213.936 | variable | | |
| 6 | 99.228 | 0.80 | 1.71300 | 53.9 |
| 7 | 16.130 | 5.00 | | |
| 8 | -23.958 | 0.80 | 1.69680 | 55.5 |
| 9 | 19.544 | 3.30 | 1.80518 | 25.4 |
| 10 | 300.020 | variable | | |
| 11 | -21.635 | 0.80 | 1.71300 | 53.9 |
| 12 | -72.558 | variable | | |
| 13 | -133.903 | 3.50 | 1.51633 | 64.1 |
| 14 | -23.644 | 0.10 | | |
| 15 | 58.540 | 3.40 | 1.51633 | 64.1 |
| 16 | -73.186 | 6.10 | | |
| 17 | 41.161 | 4.30 | 1.51633 | 64.1 |
| 18 | -75.691 | 0.30 | | |
| 19 | 25.741 | 3.30 | 1.51633 | 64.1 |
| 20 | 95.220 | 1.90 | | |
| 21 | -47.471 | 1.00 | 1.80518 | 25.4 |
| 22 | 95.989 | 13.70 | | |
| 23 | 78.415 | 1.00 | 1.80518 | 25.4 |
| 24 | 23.437 | 1.60 | | |
| 25 | 42.067 | 3.30 | 1.72000 | 50.2 |
| 26 | -31.552 | 0.30 | | |
| 27 | 29.130 | 2.60 | 1.69680 | 55.5 |
| 28 | 81.432 | | | |

| f | 11.498 | 29.128 | 69.000 |
|---|---|---|---|
| d5 | 1.200 | 20.363 | 31.200 |
| d10 | 32.350 | 9.730 | 2.350 |
| d12 | 1.100 | 4.557 | 1.100 |

4. The zoom lens system according to Claim 1 which is illustrated by data as follows:

$f = 11.490$ $\quad$ $fb = 16.10$ $\quad$ $F = 1.34 \sim 1.44$

| No | R | d | nd | $\nu$ |
|---|---|---|---|---|
| 1 | 67.571 | 1.50 | 1.80518 | 25.4 |
| 2 | 40.282 | 9.60 | 1.58913 | 61.1 |
| 3 | -726.993 | 0.20 | | |
| 4 | 42.844 | 6.30 | 1.48749 | 70.1 |
| 5 | 192.889 | variable | | |
| 6 | 65.946 | 0.80 | 1.69680 | 55.5 |
| 7 | 15.321 | 5.00 | | |
| 8 | -22.581 | 0.80 | 1.69680 | 55.5 |
| 9 | 19.606 | 3.30 | 1.80518 | 25.4 |
| 10 | 264.645 | variable | | |
| 11 | -21.559 | 0.80 | 1.71300 | 53.9 |
| 12 | -74.514 | variable | | |
| 13 | -130.118 | 3.50 | 1.51633 | 64.1 |
| 14 | -23.695 | 0.10 | | |
| 15 | 59.216 | 3.40 | 1.51633 | 64.1 |
| 16 | -68.314 | 6.10 | | |
| 17 | 40.256 | 4.30 | 1.51633 | 64.1 |
| 18 | -96.740 | 0.30 | | |
| 19 | 27.775 | 3.30 | 1.51633 | 64.1 |
| 20 | 133.597 | 1.90 | | |
| 21 | -47.978 | 1.00 | 1.80518 | 25.4 |
| 22 | 135.689 | 13.80 | | |
| 23 | 67.541 | 1.00 | 1.80518 | 25.4 |
| 24 | 21.830 | 1.60 | | |
| 25 | 37.194 | 3.30 | 1.69680 | 55.5 |
| 26 | -30.473 | 0.30 | | |
| 27 | 23.599 | 2.60 | 1.72000 | 50.2 |
| 28 | 40.839 | | | |

| f | 11.490 | 29.119 | 69.004 |
|---|---|---|---|
| d5 | 1.200 | 20.360 | 31.200 |
| d10 | 32.350 | 9.730 | 2.350 |
| d12 | 1.100 | 4.560 | 1.100 |

5. The zoom lens system according to Claim 1 which is illustrated by data as follows:

f = 11.5 ~ 69.0        fb = 16.92        F = 1.34 ~ 1.44

| No | R | d | nd | $\nu$ |
|----|------|------|------|------|
| 1 | 126.045 | 1.60 | 1.74077 | 27.8 |
| 2 | 44.877 | 10.30 | 1.62299 | 58.2 |
| 3 | -207.630 | 0.15 | | |
| 4 | 38.742 | 6.40 | 1.60311 | 60.7 |
| 5 | 124.016 | variable | | |
| 6 | 193.120 | 0.90 | 1.69680 | 55.5 |
| 7 | 15.466 | 5.00 | | |
| 8 | -24.660 | 0.90 | 1.69680 | 55.5 |
| 9 | 19.043 | 3.50 | 1.80518 | 25.4 |
| 10 | 396.548 | variable | | |
| 11 | -22.561 | 0.90 | 1.71700 | 47.9 |
| 12 | -64.407 | variable | | |
| 13 | -161.632 | 3.60 | 1.51633 | 64.1 |
| 14 | -26.269 | 0.10 | | |
| 15 | 59.891 | 3.20 | 1.58913 | 61.0 |
| 16 | -100.115 | 6.50 | | |
| 17 | 32.613 | 5.00 | 1.51633 | 64.1 |
| 18 | -80.319 | 0.20 | | |
| 19 | 22.608 | 5.50 | 1.51633 | 64.1 |
| 20 | 95.210 | 1.75 | | |
| 21 | -42.763 | 1.80 | 1.80518 | 25.4 |
| 22 | 38.486 | 6.90 | | |
| 23 | 124.488 | 1.70 | 1.80518 | 25.4 |
| 24 | 26.570 | 2.50 | | |
| 25 | 118.888 | 3.90 | 1.71700 | 47.9 |
| 26 | -23.785 | 0.20 | | |
| 27 | 24.882 | 3.50 | 1.72000 | 43.7 |
| 28 | 73.991 | | | |

| | | | |
|-----|--------|--------|--------|
| f | 11.503 | 29.603 | 69.011 |
| d5 | 1.345 | 20.002 | 30.045 |
| d10 | 31.200 | 8.461 | 2.499 |
| d12 | 1.199 | 5.281 | 1.199 |

6.   The zoom lens system according to Claim 1 which is illustrated by data as follows:

f = 11.5 ∼ 69.0        fb = 15.74        F = 1.42 ∼ 1.48

| No | R | d | nd | ν |
|----|------|------|------|------|
| 1 | 133.570 | 1.70 | 1.78470 | 26.2 |
| 2 | 49.902 | 9.00 | 1.62299 | 58.2 |
| 3 | -271.975 | 0.10 | | |
| 4 | 40.750 | 6.60 | 1.62299 | 58.2 |
| 5 | 143.409 | variable | | |
| 6 | 220.611 | 1.20 | 1.69680 | 55.5 |
| 7 | 15.419 | 5.00 | | |
| 8 | -27.758 | 1.10 | 1.69680 | 55.5 |
| 9 | 21.896 | 3.50 | 1.80518 | 25.4 |
| 10 | 4,617.412 | variable | | |
| 11 | -23.705 | 1.20 | 1.78590 | 44.2 |
| 12 | -60.605 | variable | | |
| 13 | -81.411 | 3.20 | 1.51633 | 64.1 |
| 14 | -26.940 | 0.10 | | |
| 15 | 51.525 | 3.20 | 1.51633 | 64.1 |
| 16 | -67.096 | 6.50 | | |
| 17 | 34.612 | 4.30 | 1.62299 | 58.2 |
| 18 | -168.110 | 0.50 | | |
| 19 | 24.388 | 5.20 | 1.62299 | 58.2 |
| 20 | 71.842 | 1.20 | | |
| 21 | -79.594 | 1.80 | 1.78470 | 26.2 |
| 22 | 52.186 | 6.80 | | |
| 23 | 461.081 | 1.60 | 1.80518 | 25.4 |
| 24 | 21.041 | 2.50 | | |
| 25 | 354.014 | 3.70 | 1.69350 | 53.2 |
| 26 | -28.444 | 0.20 | | |
| 27 | 22.246 | 3.50 | 1.65844 | 50.9 |
| 28 | 3,343.033 | | | |

| f | 11.500 | 30.061 | 69.010 |
|-----|--------|--------|--------|
| d5 | 2.000 | 22.260 | 32.800 |
| d10 | 33.600 | 9.200 | 2.800 |
| d12 | 1.000 | 5.140 | 1.000 |

7.   The zoom lens system according to Claim 1 which is illustrated by data as follows:

f = 11.5 ~ 69.0     fb = 16.14     F = 1.42 ~ 1.48

| No | R | d | nd | $\nu$ |
|----|------|------|------|------|
| 1 | 147.578 | 1.70 | 1.74077 | 27.8 |
| 2 | 47.144 | 9.50 | 1.62299 | 58.2 |
| 3 | -210.938 | 0.10 | | |
| 4 | 40.276 | 6.60 | 1.60311 | 60.7 |
| 5 | 133.012 | variable | | |
| 6 | 186.577 | 1.20 | 1.69680 | 55.5 |
| 7 | 15.897 | 5.00 | | |
| 8 | -26.729 | 1.10 | 1.69680 | 55.5 |
| 9 | 21.644 | 3.50 | 1.80518 | 25.4 |
| 10 | 843.015 | variable | | |
| 11 | -22.422 | 1.00 | 1.71300 | 53.8 |
| 12 | -61.221 | variable | | |
| 13 | -118.164 | 3.20 | 1.51633 | 64.1 |
| 14 | -26.348 | 0.10 | | |
| 15 | 74.072 | 3.20 | 1.58913 | 61.0 |
| 16 | -76.101 | 6.50 | | |
| 17 | 26.945 | 6.80 | 1.48749 | 70.1 |
| 18 | -508.571 | 0.20 | | |
| 19 | 17.246 | 6.80 | 1.48749 | 70.1 |
| 20 | 38.924 | 4.00 | | |
| 21 | -36.662 | 1.50 | 1.84666 | 23.9 |
| 22 | 18.419 | 4.00 | | |
| 23 | -124.859 | 3.50 | 1.69680 | 55.5 |
| 24 | -21.690 | 0.10 | | |
| 25 | 27.935 | 4.00 | 1.69680 | 55.5 |
| 26 | -84.350 | | | |

| f | 11.500 | 30.069 | 69.004 |
|------|------|------|------|
| d5 | 1.500 | 21.760 | 32.300 |
| d10 | 33.600 | 9.200 | 2.800 |
| d12 | 1.200 | 5.340 | 1.200 |

8.    The zoom lens system according to Claim 1 which is illustrated by data as follows:

f = 8.0 ~ 48.0      fb = 12.59      FNO. = 1.23

| No | R | d | nd | $\nu$ |
|---|---|---|---|---|
| 1 | 57.439 | 1.40 | 1.80518 | 25.4 |
| 2 | 31.940 | 9.00 | 1.58913 | 61.1 |
| 3 | -382.919 | 0.20 | | |
| 4 | 27.587 | 6.80 | 1.51633 | 64.1 |
| 5 | 109.331 | variable | | |
| 6 | 95.819 | 0.70 | 1.71300 | 53.9 |
| 7 | 10.506 | 4.20 | | |
| 8 | -16.436 | 0.70 | 1.69680 | 55.5 |
| 9 | 14.400 | 2.70 | 1.80518 | 25.4 |
| 10 | -1,399.957 | variable | | |
| 11 | -14.947 | 0.70 | 1.71300 | 53.9 |
| 12 | -61.261 | variable | | |
| 13 | -90.231 | 3.20 | 1.51633 | 64.1 |
| 14 | -16.482 | 0.10 | | |
| 15 | 49.257 | 3.20 | 1.51633 | 64.1 |
| 16 | -43.530 | 7.10 | | |
| 17 | 28.717 | 3.60 | 1.51633 | 64.1 |
| 18 | -74.154 | 0.30 | | |
| 19 | 18.289 | 2.60 | 1.51633 | 64.1 |
| 20 | 66.894 | 1.90 | | |
| 21 | -31.778 | 1.00 | 1.80518 | 25.4 |
| 22 | 106.474 | 6.00 | | |
| 23 | 755.190 | 1.00 | 1.80518 | 25.4 |
| 24 | 21.178 | 2.00 | | |
| 25 | 86.781 | 3.20 | 1.71300 | 53.9 |
| 26 | -18.150 | 0.30 | | |
| 27 | 18.398 | 2.60 | 1.71300 | 53.9 |
| 28 | 58.611 | | | |

| f | 8.000 | 16.935 | 48.000 |
|---|---|---|---|
| d5 | 1.200 | 12.006 | 21.100 |
| d10 | 22.100 | 9.468 | 2.200 |
| d12 | 1.100 | 2.926 | 1.100 |

9.  The zoom lens system according to Claim 1 which is illustrated by data as follows:

f = 8.0 ~ 48.0      fb = 12.92      ENO. = 1.4

| No | R | d | nd | $\nu$ |
|---|---|---|---|---|
| 1 | 50.012 | 1.30 | 1.80518 | 25.4 |
| 2 | 28.899 | 7.80 | 1.58913 | 61.1 |
| 3 | -1,479.989 | 0.20 | | |
| 4 | 27.057 | 5.90 | 1.51633 | 64.1 |
| 5 | 115.040 | variable | | |
| 6 | 46.322 | 0.70 | 1.71300 | 53.9 |
| 7 | 9.976 | 4.10 | | |
| 8 | -14.573 | 0.70 | 1.69680 | 55.5 |
| 9 | 14.077 | 2.40 | 1.80518 | 25.4 |
| 10 | 1,169.022 | variable | | |
| 11 | -17.898 | 0.70 | 1.71300 | 53.9 |
| 12 | -2,524.754 | variable | | |
| 13 | -72.443 | 3.00 | 1.51633 | 64.1 |
| 14 | -14.308 | 0.10 | | |
| 15 | 56.377 | 2.55 | 1.51633 | 64.1 |
| 16 | -38.106 | 7.10 | | |
| 17 | 21.136 | 3.16 | 1.51633 | 64.1 |
| 18 | -250.501 | 0.30 | | |
| 19 | 17.946 | 2.28 | 1.51633 | 64.1 |
| 20 | 51.698 | 1.67 | | |
| 21 | -44.462 | 0.90 | 1.80518 | 25.4 |
| 22 | 56.889 | 6.30 | | |
| 23 | 431.119 | 0.90 | 1.80518 | 25.4 |
| 24 | 18.925 | 1.76 | | |
| 25 | 106.556 | 2.80 | 1.71300 | 53.9 |
| 26 | -17.697 | 0.30 | | |
| 27 | 21.535 | 2.28 | 1.71300 | 53.9 |
| 28 | 643.100 | | | |

| f | 7.998 | 20.292 | 48.000 |
|---|---|---|---|
| d5 | 1.100 | 13.516 | 20.500 |
| d10 | 20.800 | 6.529 | 1.400 |
| d12 | 1.100 | 2.955 | 1.100 |

10.   The zoom lens system according to Claim 1 which is illustrated by data as follows:

f = 8.0 ～ 48.0        fb = 12.55        FNO. = 1.23

| No | R | d | nd | $\nu$ |
|----|------|------|------|------|
| 1 | 54.017 | 1.50 | 1.80518 | 25.4 |
| 2 | 31.062 | 9.80 | 1.58913 | 61.1 |
| 3 | -1,454.702 | 0.20 | | |
| 4 | 28.089 | 7.40 | 1.51633 | 64.1 |
| 5 | 120.227 | variable | | |
| 6 | 99.442 | 0.70 | 1.71300 | 53.9 |
| 7 | 10.407 | 4.35 | | |
| 8 | -17.166 | 0.70 | 1.69680 | 55.5 |
| 9 | 14.857 | 2.70 | 1.80518 | 25.4 |
| 10 | -4,549.459 | variable | | |
| 11 | -14.982 | 0.70 | 1.71300 | 53.9 |
| 12 | -60.428 | variable | | |
| 13 | -81.661 | 3.20 | 1.51633 | 64.1 |
| 14 | -16.575 | 0.10 | | |
| 15 | 45.287 | 3.20 | 1.51633 | 64.1 |
| 16 | -44.921 | 0.50 | | |
| prism | ∞ | 8.20 | 1.51633 | 64.1 |
| | ∞ | 6.60 | | |
| 17 | 29.136 | 3.60 | 1.51633 | 64.1 |
| 18 | -64.459 | 0.30 | | |
| 19 | 18.820 | 2.60 | 1.51633 | 64.1 |
| 20 | 85.722 | 1.90 | | |
| 21 | -26.960 | 1.00 | 1.80518 | 25.4 |
| 22 | 101.456 | 5.50 | | |
| 23 | 118.614 | 1.00 | 1.80518 | 25.4 |
| 24 | 22.105 | 2.00 | | |
| 25 | 108.129 | 3.20 | 1.71300 | 53.9 |
| 26 | -17.659 | 0.30 | | |
| 27 | 19.500 | 2.60 | 1.71300 | 53.9 |
| 28 | 57.645 | | | |

| f | 8.000 | 18.086 | 48.001 |
|----|------|------|------|
| d5 | 1.200 | 12.747 | 21.100 |
| d10 | 21.800 | 8.301 | 1.900 |
| d12 | 1.100 | 3.052 | 1.100 |

11.    The zoom lens system according to Claim 1 which is illustrated by data as follows:

    f = 8.0 ~ 48.0      fb = 12.95      F = 1.4

| No | R | d | nd | $\nu$ |
|---|---|---|---|---|
| 1 | 52.974 | 1.30 | 1.80518 | 25.4 |
| 2 | 30.312 | 8.60 | 1.58913 | 61.1 |
| 3 | -1,018.401 | 0.20 | | |
| 4 | 26.942 | 6.80 | 1.51633 | 64.1 |
| 5 | 114.775 | variable | | |
| 6 | 111.189 | 0.70 | 1.71300 | 53.9 |
| 7 | 10.425 | 4.20 | | |
| 8 | -16.719 | 0.70 | 1.69680 | 55.5 |
| 9 | 14.860 | 2.40 | 1.80518 | 25.4 |
| 10 | 1,935.348 | variable | | |
| 11 | -15.141 | 0.70 | 1.71300 | 53.9 |
| 12 | -62.787 | variable | | |
| 13 | -51.183 | 2.80 | 1.51633 | 64.1 |
| 14 | -14.524 | 0.10 | | |
| 15 | 62.147 | 2.55 | 1.51633 | 64.1 |
| 16 | -35.732 | 0.50 | | |
| prism | ∞ | 7.90 | 1.51633 | 64.1 |
| | ∞ | 6.60 | | |
| 17 | 18.540 | 3.16 | 1.51633 | 64.1 |
| 18 | -310.292 | 0.30 | | |
| 19 | 22.388 | 2.28 | 1.51633 | 64.1 |
| 20 | 68.079 | 1.67 | | |
| 21 | -29.409 | 0.90 | 1.80518 | 25.4 |
| 22 | 81.677 | 6.70 | | |
| 23 | 62.273 | 0.90 | 1.80518 | 25.4 |
| 24 | 18.408 | 1.76 | | |
| 25 | 74.602 | 2.80 | 1.71300 | 53.9 |
| 26 | -18.145 | 0.30 | | |
| 27 | 19.698 | 2.28 | 1.71300 | 53.9 |
| 28 | 67.218 | | | |

| f | 8.000 | 20.188 | 48.000 |
|---|---|---|---|
| d5 | 1.100 | 13.516 | 20.500 |
| d10 | 21.200 | 6.674 | 1.800 |
| d12 | 1.100 | 3.210 | 1.100 |

0081997

FIG. 1

FIG. 2

FIG. 3

0081997

FIG. 4
( f = 11.50 )

F1.34

-0.2  0  0.2
SPHERICAL
ABERRATION

26.8°

-0.2  0  0.2
ASTIGMATISM

26.8°

-2%  0  2%
DISTORTION

FIG. 5
( f = 28.83 )

F1.34

-0.2  0  0.2
SPHERICAL
ABERRATION

10.5°

-0.2  0  0.2
ASTIGMATISM

10.5°

-2%  0  2%
DISTORTION

FIG. 6
( f = 69.07 )

F1.44

-0.2  0  0.2
SPHERICAL
ABERRATION

4.4°

-0.2  0  0.2
ASTIGMATISM

4.4°

-2%  0  2%
DISTORTION

0081997

FIG. 7
(f = 11.50)

F 1.34

-0.2  0  0.2
SPHERICAL
ABERRATION

26.8°

-0.2  0  0.2
ASTIGMATISM

26.8°

-2%  0  2%
DISTORTION

FIG. 8
(f = 29.13)

F 1.34

-0.2  0  0.2
SPHERICAL
ABERRATION

10.4°

-0.2  0  0.2
ASTIGMATISM

10.4°

-2%  0  2%
DISTORTION

FIG. 9
(f = 69.00)

F1.44

-0.2  0  0.2
SPHERICAL
ABERRATION

4.4°

-0.2  0  0.2
ASTIGMATISM

4.4°

-2%  0  2%
DISTORTION

0081997

4/11

**FIG. 10**
( f = 11.49 )

F1.34
-0.2  0  0.2
SPHERICAL ABERRATION

26.7°
-0.2  0  0.2
ASTIGMATISM

26.7°
-2%  0  2%
DISTORTION

**FIG. 11**
( f = 29.12 )

F1.34
-0.2  0  0.2
SPHERICAL ABERRATION

10.3°
-0.2  0  0.2
ASTIGMATISM

10.3°
-2%  0  2%
DISTORTION

**FIG. 12**
( f = 69.00 )

F1.44
-0.2  0  0.2
SPHERICAL ABERRATION

4.4°
-0.2  0  0.2
ASTIGMATISM

4.4°
-2%  0  2%
DISTORTION

0081997

FIG. 13
( f =11.50 )

FIG. 14
( f = 29.60 )

FIG. 15
( f = 69.01 )

FIG. 16
( f = 11.50 )

F1.42
-0.2 0 0.2
SPHERICAL ABERRATION

26.6°
-0.2 0 0.2
ASTIGMATISM

26.6°
-2% 0 2%
DISTORTION

FIG. 17
( f = 30.06 )

F1.42
-0.2 0 0.2
SPHERICAL ABERRATION

10.2°
-0.2 0 0.2
ASTIGMATISM

10.2°
-2% 0 2%
DISTORTION

FIG. 18
( f = 69.01 )

F1.48
-0.2 0 0.2
SPHERICAL ABERRATION

4.4°
-0.2 0 0.2
ASTIGMATISM

4.4°
-2% 0 2%
DISTORTION

FIG. 19
( f = 11.50 )

FIG. 20
( f = 30.07 )

FIG. 21
( f = 69.00 )

0081997

7/11

F1.42 — SPHERICAL ABERRATION (-0.2, 0, 0.2)
26.6° — ASTIGMATISM (-0.2, 0, 0.2)
26.6° — DISTORTION (-2%, 0, 2%)

F1.42 — SPHERICAL ABERRATION (-0.2, 0, 0.2)
10.1° — ASTIGMATISM (-0.2, 0, 0.2)
10.1° — DISTORTION (-2%, 0, 2%)

F1.48 — SPHERICAL ABERRATION (-0.2, 0, 0.2)
4.4° — ASTIGMATISM (-0.2, 0, 0.2)
4.4° — DISTORTION (-2%, 0, 2%)

8/11

0081997

FIG. 22
( f = 8.0mm )

F1.23 — SPHERICAL ABERRATION: -0.2 0 0.2

ASTIGMATISM: -0.2 0 0.2

26.6° — DISTORTION: -2% 0 2%

FIG. 23
( f = 16.935mm )

F1.23 — SPHERICAL ABERRATION: -0.2 0 0.2

ASTIGMATISM: -0.2 0 0.2

12.5° — DISTORTION: -2% 0 2%

FIG. 24
( f = 48.0mm )

F1.23 — SPHERICAL ABERRATION: -0.2 0 0.2

ASTIGMATISM: -0.2 0 0.2

4.4° — DISTORTION: -2% 0 2%

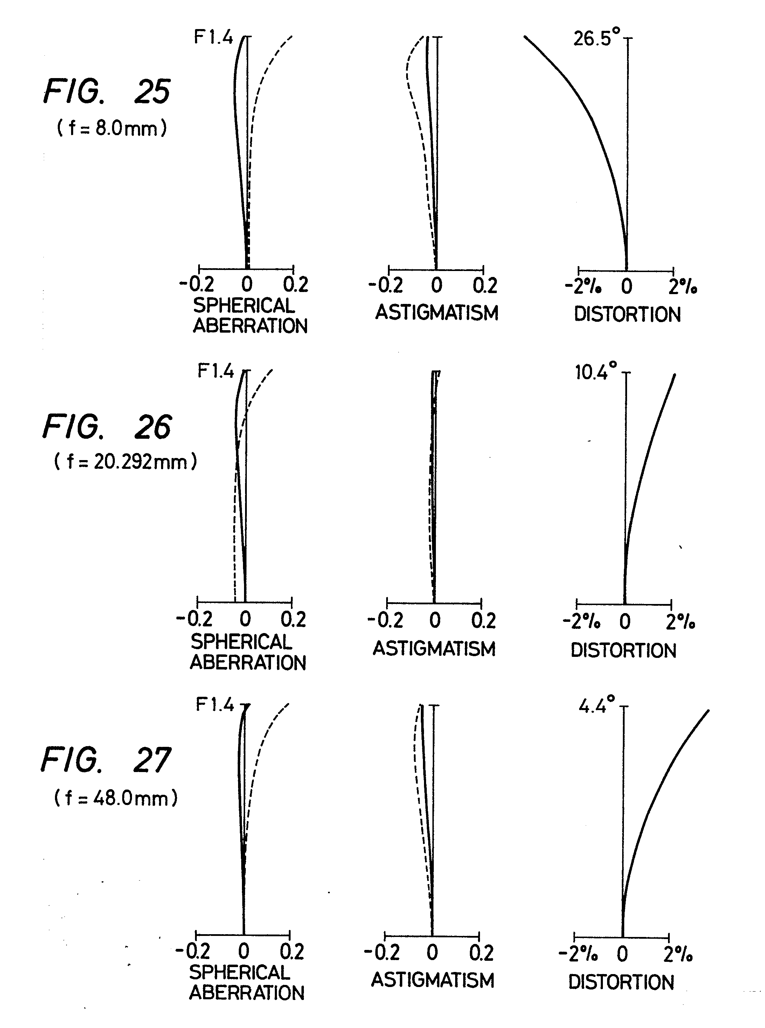

FIG. 25 (f = 8.0mm)

FIG. 26 (f = 20.292mm)

FIG. 27 (f = 48.0mm)

0081997

9/11

0081997

## FIG. 28
( f = 8.0mm )

F1.23

−0.2 0 0.2
SPHERICAL
ABERRATION

−0.2 0 0.2
ASTIGMATISM

26.6°

−2‰ 0 2‰
DISTORTION

## FIG. 29
( f = 18.086mm )

F1.23

−0.2 0 0.2
SPHERICAL
ABERRATION

−0.2 0 0.2
ASTIGMATISM

11.8°

−2‰ 0 2‰
DISTORTION

## FIG. 30
( f = 48.0mm )

F1.23

−0.2 0 0.2
SPHERICAL
ABERRATION

−0.2 0 0.2
ASTIGMATISM

4.4°

−2‰ 0 2‰
DISTORTION

0081997

FIG. 31

( f = 8.0mm )

F1.4

-0.2　0　0.2
SPHERICAL
ABERRATION

-0.2　0　0.2
ASTIGMATISM

26.5°

-2%　0　2%
DISTORTION

FIG. 32

( f = 20.188mm )

F1.4

-0.2　0　0.2
SPHERICAL
ABERRATION

-0.2　0　0.2
ASTIGMATISM

10.5°

-2%　0　2%
DISTORTION

FIG. 33

( f = 48.0mm )

F1.4

-0.2　0　0.2
SPHERICAL
ABERRATION

-0.2　0　0.2
ASTIGMATISM

4.4°

-2%　0　2%
DISTORTION

European Patent Office

**EUROPEAN SEARCH REPORT**

0081997

Application number

## DOCUMENTS CONSIDERED TO BE RELEVANT

EP 82306611.3

| Category | Citation of document with indication, where appropriate, of relevant passages | Relevant to claim | CLASSIFICATION OF THE APPLICATION (Int. Cl. ³) |
|---|---|---|---|
| A | <u>DE - A1 - 2 829 573</u> (CANON)<br>  * Claims; pages 8-15; fig. 1-6 * | | G 02 B 15/16 |
| A,P | <u>GB - A - 2 093 212</u> (ASAHI)<br>  * Fig. 1; Table 1; page 2, line 1 - page 3, line 2 * | | |
| A,P | <u>DE - A1 - 3 127 338</u> (NIPPON)<br>  * Claims; page 15, line 1-page 16, line 11; page 17, line 4 - page 28, line 19; fig. 1-4 * | | |
| A | <u>US - A - 4 062 621</u> (FLEISCHMAN)<br>  * Fig. 1; column 1, line 66 - column 2, line 62; claims * | | |

TECHNICAL FIELDS SEARCHED (Int. Cl. ³)

G 02 B 15/00

The present search report has been drawn up for all claims

| Place of search | Date of completion of the search | Examiner |
|---|---|---|
| VIENNA | 24-02-1983 | GRONAU |